# EUROPÄISCHE PATENTSCHRIFT

(11) **EP 0 711 990 B1**
(45) Veröffentlichungstag und Bekanntmachung des Hinweises auf die Patenterteilung: **08.04.1998**
(21) Anmeldenummer: 95114868.3
(22) Anmeldetag: 21.09.1995
(51) Int. Cl.: G01N 1/12

(54) **Probennahmeeinrichtung für Metallschmelzen**
Sampling device for liquid metals
Echantillonneur pour métal liquide

(30) Priorität: 14.11.1994 DE 4440577
(43) Veröffentlichungstag der Anmeldung: 15.05.1996
(73) Patentinhaber: Heraeus Electro-Nite International N.V., 3530 Houthalen (BE)
(72) Erfinder: Baerts, Christiaan Eugene Edouard, B-3940 Paal (BE)
(74) Vertreter: Kühn, Hans-Christian

(56) Entgegenhaltungen:
- EP-A- 0 107 219
- EP-A- 0 402 638
- DE-A- 3 000 201
- DE-A- 4 130 400
- US-A- 4 699 014

## Beschreibung

Die Erfindung betrifft eine Probennahmeeinrichtung für Metallschmelzen mit einer in einem Papprohr angeordneten Probenkammer, die einen durch das Papprohr geführten Einlaufkanal aufweist, der im wesentlichen aus einem hitzebeständigen Einlaufrohr gebildet ist, wobei das äußere Ende des Einlaufrohres unterhalb des Außenumfanges der Probennahmeeinrichtung endet und mit einer Verzögerungseinrichtung verschlossen ist, wobei zwischen Kappe und Papprohr ein Zwischenraum gebildet ist, der mit Zement ausgefüllt ist.

Eine derartige Vorrichtung ist aus der EP-A-402 638 bekannt. Hier ist eine Probennahmeeinrichtung beschrieben mit einer in einem Papprohr angeordneten Probenkammer. Durch das Papprohr ist ein Einlaufkanal geführt, der mit einer verbrauchbaren Schlackekappe verschlossen ist. Die Schlackekappe umgibt den Einlaufkanal teilweise und ist mit Zement im Papprohr befestigt.

Es sind auch Probennehmer, beispielsweise auch aus EP-A-107 219, bekannt, die einen Einlaufkanal aufweisen, dessen Öffnung durch Verzögerungseinrichtungen verschlossen ist, die aus einer oder mehreren, beabstandet zueinander angeordneten Metallkappen gebildet sind. Über diesen Metallkappen kann, ebenfalls beabstandet, eine dünne Schicht aus Pappe angebracht sein, wobei die Pappkappe direkt an dem Körper aus Formsand angeordnet ist. Derartig beabstandet voneinander angeordnete Verzögerungsschichten verbrennen bzw. schmelzen nacheinander ab, wobei eine reproduzierbare Verzögerungszeit nicht erreicht werden kann.

Ähnliche Probennehmer sind beispielsweise aus US 4 699 014 bekannt.

Eine weitere Vorrichtung, bei der die Einlauföffnung in die Probenkammer in der Mantelfläche des Papprohres mündet, ist aus der DE-PS 30 00 201 bekannt. Hier ist eine Probennahmevorrichtung beschrieben, bei der die Probenkammer einen seitlichen Einlauf für Metallschmelzen aufweist. Die Einlauföffnung mündet in der Mantelfläche des die Probenkammer umgebenden Papprohres und ist mit einem Überzug umgeben, der eine Verzögerungseinrichtung bildet und die Einlauföffnung während des Eintauchvorganges der Probennahmeeinrichtung in die Schmelze verschließt, damit beim Durchstoßen der Schlackeschicht ein Eindringen von Verunreinigungsteilchen in die Kammer verhindert wird. Die Verzögerungseinrichtung wird nach dem Durchstoßen der Schlackeschicht zerstört und die Einlauföffnung wird freigegeben. Durch einen solchen Verschluß wird zwar das Eindringen von Schlacke während des Durchstoßens durch die Schlackeschicht verhindert, es kann jedoch nicht verhindert werden, daß durch den dann freiliegenden Einlauf Verunreinigungen anderer Art, wie z.B. Gasblasen oder Teilchen des Seitenüberzuges in die Kammer eindringen und die Probe verunreinigen.

Ausgehend von diesem Stand der Technik liegt der Erfindung die Aufgabe zugrunde, einen Probennehmer der eingangs genannten Art zu schaffen, bei dem das Eindringen von Verunreinigungen, insbesondere von Schlacketeilchen, Gaseinschlußteilchen und Teilchen des Papprohres in die Probenkammer durch eine Kappe verhindert wird, die das Einlaufrohr nach einer möglichst genau bestimmbaren Zeit freigibt.

Die Aufgabe wird erfindungsgemäß dadurch gelöst, daß die Verzögerungseinrichtung als mehrschichtige Kappe ausgebildet ist, daß die mehrschichtige Kappe eine Metallkappe aufweist, an deren äußerer Stirnfläche eine Verzögerungsscheibe aus einem brennbaren Material angeklebt ist, daß an der äußeren Oberfläche der Verzögerungsscheibe eine Metallfolie anliegt und daß zwischen der Seitenfläche der Verzögerungsscheibe und dem Zement eine Metallschicht angeordnet ist. Durch eine derartige Anordnung wird die Einlauföffnung nicht nur vor mechanischen Beschädigungen geschützt, da sie nicht aus der Papprohr-Geometrie herausragt, sondern es wird auch gewährleistet, daß die das Einlaufrohr verschließende Kappe lediglich an seiner Frontseite der Wärmebelastung während des Eintauchens in die Metallschmelze ausgesetzt wird. Des weiteren werden die sich eventuell an der äußeren Schicht der Kappe festsetzenden Verunreinigungsteilchen während des Auflösens in dieser Schicht und vor der Zerstörung der inneren Schicht der Kappe von der Einlauföffnung weggespült, so daß diese Verunreinigungsteilchen nach Zerstörung der Kappe nicht in die Probenkammer eindringen können. Die mehrschichtige Kappe kann nicht nur entsprechend den jeweiligen Erfordernissen individuell angepaßt vormontiert und in einem Stück vor dem Einlaufkanal angebracht werden, sie dichtet den Einlaufkanal mittels des Zementes auch derart ab, daß ein gasdichter Verschluß zwischen der Metallschmelze und der Probenkammer gebildet wird, so daß in dem Einlaufkanal und in der Probenkammer der Normaldruck erhalten wird, bis in die Kappe zerstört ist.

Ein derartiger Schichtenaufbau kann sehr einfach gefertigt werden und sichert, daß der Einlaufkanal erst nach Durchstoßen der Schlackeschicht und Wegspülen von Verunreinigungsteilchen freigegeben wird. Bei bzw. nach Durchstoßen der Schlackeschicht verbrennt die Verzögerungsscheibe, die dadurch eine zu schnelle Zerstörung der Metallkappe verhindert. Die Verzögerungsscheibe wiederum wird bei der Annäherung der Probennahmeeinrichtung an die Metallschmelze durch die Metallfolie vor der Strahlungswärme geschützt, da diese zum größten Teil an der Metallfolie reflektiert wird. Die Metallfolie wird bei Eintritt in die Schlackeschicht zerstört. Da die mehrschichtige Kappe seitlich mit Zement befestigt wird, der im feuchten Zustand zwischen die Kappe und das Papprohr eingebracht wird, schützt eine Metallschicht die Verzögerungsscheibe vor Zerstörung durch die aus dem Zement entweichende Feuchtigkeit.

Um die Gasdichtheit zusätzlich abzusichern, ist es zweckmäßig, daß der Zement einen zwischen der Kappe und dem Einlaufrohr gebildeten Spalt verschließt. Vorteilhaft ist es weiterhin, daß die Verzögerungsscheibe aus Pappe, Holz gebildet ist. Zweckmäßig ist es, daß die Metallschicht aus einer Metallhülse gebildet ist, die an der Seitenfläche der Metallkappe anliegt und deren äußerer Rand nach innen abgewinkelt ist und an einem Teil der Metallfolie anliegt. Eine derartige Anordnung sichert während und nach der Montage einen festen Sitz der Verzögerungsschicht auf der Metallkappe, da sie zwischen Metall kappe und Metallhülse eingeklemmt wird. Die Metallhülse gewährleistet eine hohe Stabilität der mehrschichtigen Kappe, ohne die Einlauföffnung in ihrem Querschnitt in störender Weise einzuengen, da die Stirnseite der Kappe vor der Metallhülse im wesentlichen nicht bedeckt wird, sondern diese Stirnfläche wird von der naturgemäß wesentlich dünneren Metallfolie bedeckt, die bei Eintritt in die Schlackeschicht, bzw. in die Metallschmelze zerstört wird.

Zweckmäßig ist es, daß innerhalb der Metallkappe eine zweite Metallkappe angeordnet ist. Dadurch wird die Möglichkeit gegeben, bei gleicher Schutzwirkung wesentlich dünnere Metallkappen mit einer wesentlich geringeren Masse und damit einer geringeren Wärmekapazität zu verwenden. Während der Zerstörung der ersten Metallkappe bildet sich zwischen beiden Kappen ein gasgefüllter Zwischenraum, der Wirbeleffekte in der auf die zweite Metallkappe treffenden Schmelze verursacht, so daß eventuell bis an die zweite Metallkappe dringende Verunreinigungen weggespült werden. Dadurch können weder Verunreinigungen fest Art, noch Gasblasen aus dem flüssigen Metall in den Einlaufkanal eindringen. Vorteilhaft für eine einwandfreie Probennahme ist es, daß nur die Stirnfläche der mehrschichtigen Kappe im wesentlichen frei von Zement ist. Dadurch wird zum einen verhindert, daß Schmelze seitlich durch die Metallkappen in den Einlaufkanal eindringt und zum anderen wird gesichert, daß die Stirnseite der mehrschichtigen Kappe keine feuerfesten Materialien aufweist, die die schichtenweise erfolgende Zerstörung der Stirnseite der Kappe behindern oder die nach Freiwerden des Einlaufkanals in die Probenkammer eindringen können. Desweiteren ist es vorteilhaft, daß nur die Stirnfläche der mehrschichtigen Kappe im wesentlichen frei von Zement ist.

Vorzugsweise ist die Verzögerungsscheibe aus Pappe und die Metallfolie aus Aluminium gebildet. Diese Materialien sichern eine einfache Herstellbarkeit und eine einwandfreie Funktion der mehrschichtigen Kappe, da beide Materialien nach Eindringen der Probennahmeeinrichtung in die Metallschmelze, insbesondere in Stahlschmelze in genügender Weise leicht zerstört werden.

Nachfolgend wird die Erfindung anhand eines Ausführungsbeispieles mittels einer Zeichnung näher erläutert.

In der Zeichnung zeigt:
- Figur 1: einen Querschnitt durch die Probennahmeeinrichtung
- Figur 2: die schematische Darstellung des Einlaufkanals mit einer mehrschichtigen Kappe
- Figur 3: die schematische Darstellung des Einlaufkanals mit zwei übereinander angeordneten Metallkappen und
- Figur 4: die schematische Darstellung der mehrschichtigen Kappe in einer vereinfachten Ausführungsform.

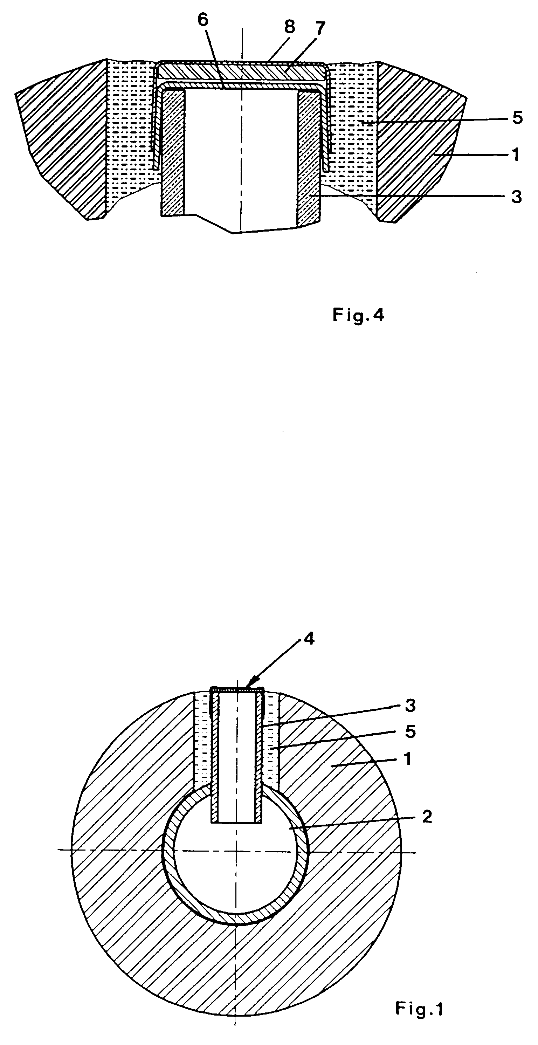

Eine beispielhafte Ausführung der erfindungsgemäßen Probennahmeinrichtung ist in Figur 1 im Querschnitt dargestellt. In einem Papprohr ist eine Probenkammer 2 konzentrisch angeordnet. Ein Einlaufrohr 3 ragt in die Probenkammer 2 hinein und ist durch eine Öffnung im Papprohr 1 hindurch bis unterhalb des Außendurchmessers des Papprohres 1 geführt. Das Einlaufrohr 3 ist an seiner Außenseite mit einer mehrschichtigen Kappe 4 verschlossen und in dem Papprohr 1 mit einem feuerfesten Zement 5 fixiert, wobei der Zement 5 eine gasdichte Abdichtung zwischen dem Papprohr 1 und dem Einlaufrohr 3 sowie zwischen dem Einlaufrohr 3 und der mehrschichtigen Kappe 4 gewährleistet. Die Stirnseite der mehrschichtigen Kappe 4 ist etwa in der Mantelfläche des Papprohres 1 angeordnet.

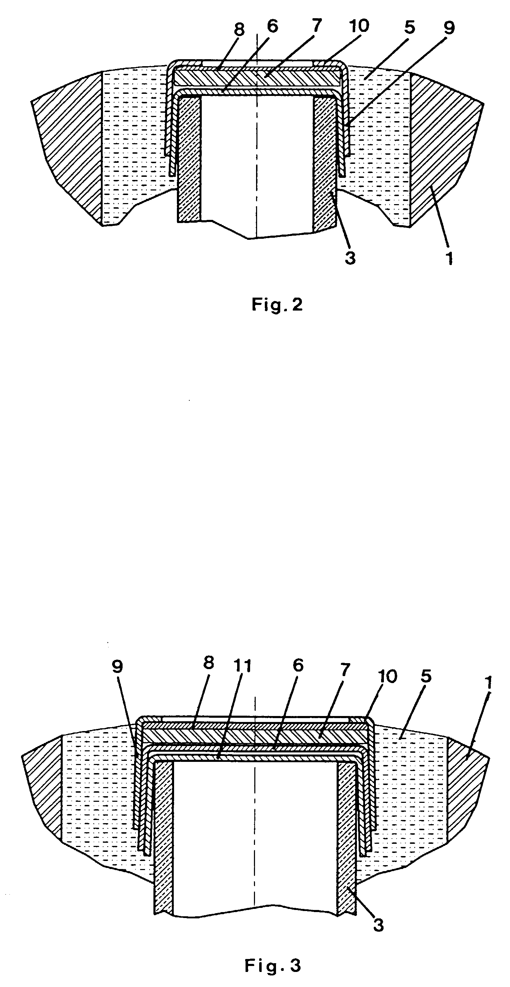

Figur 2 zeigt die Ausbildung einer mehrschichtigen Kappe 4, wie sie für eine Probennahme zur thermischen Analyse geeignet ist. Die mehrschichtige Kappe 4 weist eine Metallkappe 6, beispielsweise aus Eisen, auf, die eine Stärke von etwa 0,2 mm besitzt. Diese Metallkappe 6 liegt an dem Einlaufrohr 3 zumindest teilweise an, etwaige Spalten zwischen dem Einlaufrohr 3 und der Metallkappe 6 sind von Zement 5 ausgefüllt. Das Einlaufrohr 3 ist aus Quarz gebildet und weist einen Innendurchmesser von etwa 12 mm auf. Auf der Stirnseite der Metallkappe 6 ist eine Verzögerungsscheibe 7 aus Pappe aufgeklebt. Diese Klebeverbindung sichert einen guten Kontakt und ein festes Anliegen der Verzögerungsscheibe 7 an der Metallkappe 6. Die Stärke der Verzögerungskappe 7 liegt je nach beabsichtigter Verzögerung etwa zwischen 0,5 und 3 mm, je nach der Temperatur der Schmelze und dem Durchmesser der Verzögerungsscheibe 7. Die Verzögerungsscheibe 7 ist an ihrer Außenoberfläche mit einer dicht anliegenden, Wärmestrahlen reflektierenden Metallfolie 8 versehen. Die Metallfolie kann bevorzugt aus Aluminium bestehen. Über der Metallkappe 6 mit der Verzögerungsscheibe 7 und der Metallfolie 8 ist eine Metallhülse 9 angeordnet, derart, daß die Seitenwand der Metallhülse 9 an der Seitenwand der Metallkappe 6 anliegt, wobei der äußere Rand 10 der Metallhülse 9 nach innen abgewinkelt ist, so daß er auf der Metallfolie 8 an deren äußerem Rand anliegt und die wesentliche Oberfläche der Metallfolie 8 unbedeckt läßt. Dadurch wird die Öffnung des Einlaufrohres 3 durch die Metallhülse 9 nicht wesentlich verkleinert. Ebenso wie die Metallkappe 6 besteht auch die Metallhülse 9 aus Eisen mit einer Stärke von etwa 0,2 mm. In den Zwischenräumen zwischen dem Einlaufrohr 3 und der mehrschichtigen Kappe 4 sowie dem Papprohr 1 ist Zement 5 angeordnet, so daß Zement 5 und Rand 10 eine annähernd ebene Oberfläche mit dem Papprohr 1 bilden. Die Metallhülse 9 sichert durch ihre Anordnung eine exakte Isolierung der Verzögerungsscheibe 7 gegen den bei Anbringung nassen Zement 5, so daß die Verzögerungsscheibe 7 nicht bereits bei der Herstellung der Probennahmeinrichtung zerstört wird. Die mehrschichtige Kappe 4 ist als solche vorgefertigt und wird als Ganzes auf das Einlaufrohr 3 aufgesetzt.

In Figur 3 ist eine ähnliche Probennahmeeinrichtung gezeigt. Im Unterschied zu der in Figur 2 gezeigten Anordnung ist direkt auf dem Einlaufrohr 3 innerhalb der Metallkappe 6 eine zweite Metallkappe 11 angeordnet. Der Innendurchmesser des Einlaufrohres 3 beträgt in diesem Beispiel etwa 16 mm, auch die zweite Metallkappe 11 ist aus etwa 0,2 mm starkem Eisen gebildet. Beide Kappen sind aufeinandergepreßt; es besteht ein geringer Luftspalt zwischen den Stirnseiten der Metallkappe 6 und der zweiten Metallkappe 11. Bei Eintauchen der Probennahmeeinrichtung in die Schmelze vergrößert sich dieser Luftspalt, sorgt für eine zusätzliche Verzögerung beim Einlauf der Metallschmelze in die Probenkammer 2 und, wie bereits oben beschrieben, dafür, daß Verunreinigungsteilchen und Gase vor der Zerstörung der zweiten Metallkappe 11 weggespült werden, so daß sie nicht in die Probenkammer 2 eindringen können. Es hat sich beispielsweise herausgestellt, daß die Verzögerungszeit durch eine Verzögerungsscheibe 7 mit einer Stärke von 1 mm und einem Durchmesser von etwa 20 mm bei einer Temperatur der Metallschmelze zwischen 1560° C und 1700° C etwa 1 - 4 Sekunden beträgt. Die in Figur 3 dargestellte mehrschichtige Kappe wird überwiegend bei der Probennahme zur Probenanalyse benutzt, wobei das flüssige Metall in der Probenkammer möglichst wenig flüchtige Bestandteile aufweisen darf.

In Figur 4 ist eine mehrschichtige Kappe dargestellt, bei der im Unterschied zu der in Figur 2 gezeigten Anordnung die Metallhülse 9 und die Metallfolie 8 eine Einheit bilden, so daß die Metallfolie 8 als Kappe ausgebildet ist, deren Seitenwand an der Seitenwand der Metallkappe 6 anliegt.

## Patentansprüche

1. Probennahmeeinrichtung für Metallschmelzen mit einer in einem Papprohr angeordneten Probenkammer, die einen durch das Papprohr geführten Einlaufkanal aufweist, der im wesentlichen aus einem hitzebeständigen Einlaufrohr gebildet ist, wobei das äußere Ende des Einlaufrohres unterhalb des Außenumfanges der Probennahmeeinrichtung endet und mit einer Kappe als Verzögerungseinrichtung verschlossen ist, wobei zwischen Kappe und Papprohr ein Zwischenraum gebildet ist, der mit Zement ausgefüllt ist, dadurch gekennzeichnet, daß die Verzögerungseinrichtung als mehrschichtige Kappe (4) ausgebildet ist, daß die mehrschichtige Kappe (4) eine Metallkappe (6) aufweist, an deren äußerer Stirnfläche eine Verzögerungsscheibe (7) aus einem brennbaren Material angeklebt ist, daß an der äußeren Oberfläche der Verzögerungsscheibe (7) eine Metallfolie (8) anliegt und daß zwischen der Seitenfläche der Verzögerungsscheibe (7) und dem Zement (5) eine Metallschicht (9) angeordnet ist.

2. Probennahmeeinrichtung nach Anspruch 1, dadurch gekennzeichnet, daß der Zement (5) einen zwischen der Kappe (4) und dem Einlaufrohr (3) gebildeten Spalt verschließt.

3. Probennahmeeinrichtung nach Anspruch 1 oder 2, dadurch gekennzeichnet, daß die Verzögerungsscheibe (7) aus Holz oder Pappe gebildet ist.

4. Probennahmeeinrichtung nach einem der Ansprüche 1 bis 3, dadurch gekennzeichnet, daß die Metallschicht aus einer Metallhülse (9) gebildet ist, die an der Seitenfläche der Metallkappe (6) anliegt und deren äußerer Rand (10) nach innen abgewinkelt ist und an einem Teil der Metallfolie (8) anliegt.

5. Probennahmeeinrichtung nach einem der Ansprüche 1 bis 4, dadurch gekennzeichnet, daß innerhalb der Metallkappe (6) eine zweite Metallkappe (11) angeordnet ist.

6. Probennahmeeinrichtung nach einem der Ansprüche 1 bis 5, dadurch gekennzeichnet, daß nur die Stirnfläche der mehrschichtigen Kappe (4) im wesentlichen frei von Zement ist.

7. Probennahmeeinrichtung nach einem der Ansprüche 1 bis 6, dadurch gekennzeichnet, daß die Verzögerungsscheibe (7) aus Pappe und die Metallfolie (8) aus Aluminium gebildet ist.

## Claims

1. A sampling device for molten metals with a sample chamber arranged in cardboard tube, which sample chamber has an inlet channel guided through the cardboard tube, which inlet channel is formed substantially from a heat-resistant inlet tube, wherein the outer end of the inlet tube terminates beneath the outer periphery of the sampling device and is being closed by a cap as retarding device, an intermediate space being formed between the cap and the cardboard tube, which intermediate space is filled with cement, characterized in that the retarding device is constructed as a multilayered cap (4), that the multilayered cap (4) has a metal cap (6), on the outer end face of which a retarding disc (7) of a combustible material is glued, that a metal foil (8) lies against the outer surface of the retarding disc (7) and that a metal layer (9) is arranged between the side face of the retarding disc (7) and the cement (5).

2. The sampling device according to Claim 1, characterized in that the cement (5) closes a gap formed between the cap (4) and the inlet tube (3).

3. The sampling device according to Claim 1 or 2, characterized in that the retarding disc (7) is formed from wood or cardboard.

4. The sampling device according to one of Claims 1 to 3, characterized in that the metal layer is formed from a metal sleeve (9) which lies against the side face of the metal cap (6) and the outer edge (10) of which is angled inwards and lies against a part of the metal foil (8).

5. The sampling device according to one of Claims 1 to 4, characterized in that inside the metal cap (6) a second metal cap (11) is arranged.

6. The sampling device according to one of Claims 1 to 5, characterized in that only the end face of the multilayered cap (4) is substantially free of cement.

7. The sampling device according to one of Claims 1 to 6, characterized in that the retarding disc (7) is formed from cardboard and the metal foil (8) is formed from aluminium.

## Revendications

1. Échantillonneur pour métal en fusion, comportant une chambre d'échantillonnage qui est disposée dans un tube de carton et qui présente un canal d'arrivée qui passe à travers le tube de carton et qui est essentiellement formé d'un tube d'arrivée résistant à la chaleur, l'extrémité extérieure du tube d'arrivée se terminant en dessous de la périphérie extérieure de l'échantillonneur et étant obturée avec un capuchon servant de dispositif de retardement, dans lequel, entre capuchon et tube de carton, se forme un espace intermédiaire qui est rempli de ciment, caractérisé par le fait que le dispositif de retardement est conçu sous forme d'un capuchon multicouche (4), que le capuchon multicouche (4) présente un capuchon métallique (6) sur la surface frontale extérieure duquel est collée une rondelle de retardement (7) en un matériau combustible, que sur la surface extérieure de la rondelle de retardement (7) s'appuie une feuille métallique (8) et qu'entre la surface frontale de la rondelle de retardement (7) et le ciment (5) est disposée une couche métallique (9).

2. Échantillonneur selon la revendication 1, caractérisé par le fait que le ciment (5) obture une fente formée entre le capuchon (4) et le tube d'arrivée (3).

3. Échantillonneur selon la revendication 1 ou 2, caractérisé par le fait que la rondelle de retardement (7) est en bois ou en carton.

4. Échantillonneur selon l'une des revendications 1 à 3, caractérisé par le fait que la couche métallique est formée d'une douille métallique (9) qui s'appuie contre la surface latérale du capuchon métallique (6) et dont le bord extérieur (10) est replié vers l'intérieur et s'appuie contre une partie de la feuille métallique (8).

5. Échantillonneur selon l'une des revendications 1 à 4, caractérisé par le fait qu'à l'intérieur du capuchon métallique (6) est disposé un second capuchon métallique (11).

6. Échantillonneur selon l'une des revendications 1 à 5, caractérisé par le fait que seule la surface frontale du capuchon multicouche (4) est essentiellement exempte de ciment.

7. Échantillonneur selon l'une des revendications 1 à 6, caractérisé par le fait que la rondelle de retardement (7) est formée de carton et la feuille métallique (8), d'aluminium.
